# EUROPEAN PATENT SPECIFICATION

(11) **EP 2 671 787 B1**
(45) Date of publication and mention of the grant of the patent: **10.10.2018**
(21) Application number: 13002865.7
(22) Date of filing: 04.06.2013
(51) Int. Cl.: B62H 5/18

(54) **Integrated anti-theft device for perforated disk brake**
Integrierte Diebstahlsicherungs-Vorrichtung für gelochte Scheibenbremsen
Dispositif antivol intégré pour frein à disque perforé

(43) Date of publication of application: 11.12.2013
(73) Proprietor: Valli, Manuel, 40064 Ozzano dell'Emilia (Bologna) (IT)
(72) Inventor: Valli, Manuel, 40064 Ozzano dell'Emilia (Bologna) (IT)
(74) Representative: Paolini, Elena

(56) References cited:
- CN-A- 101 104 423
- CN-Y- 2 848 680
- CN-Y- 201 086 764
- US-A1- 2008 053 766

## Description

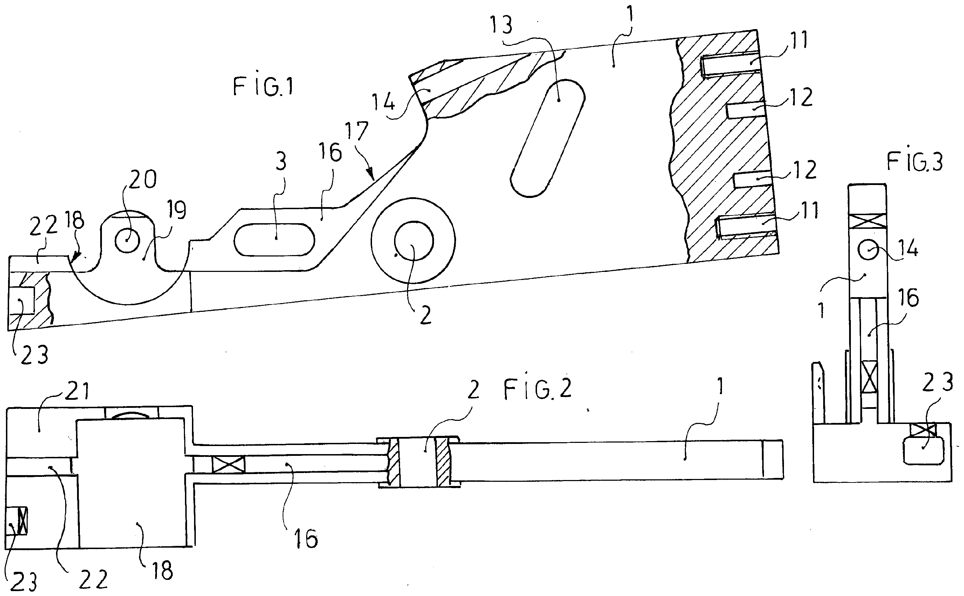

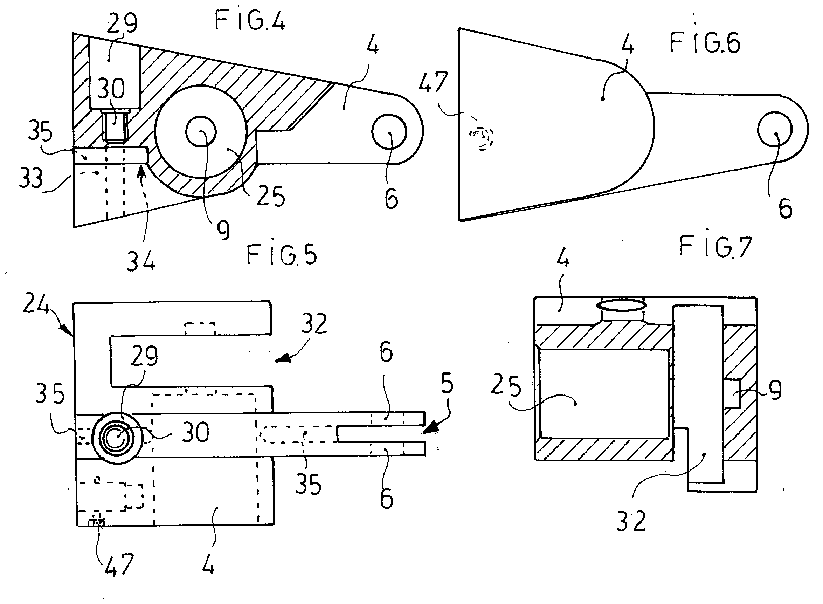

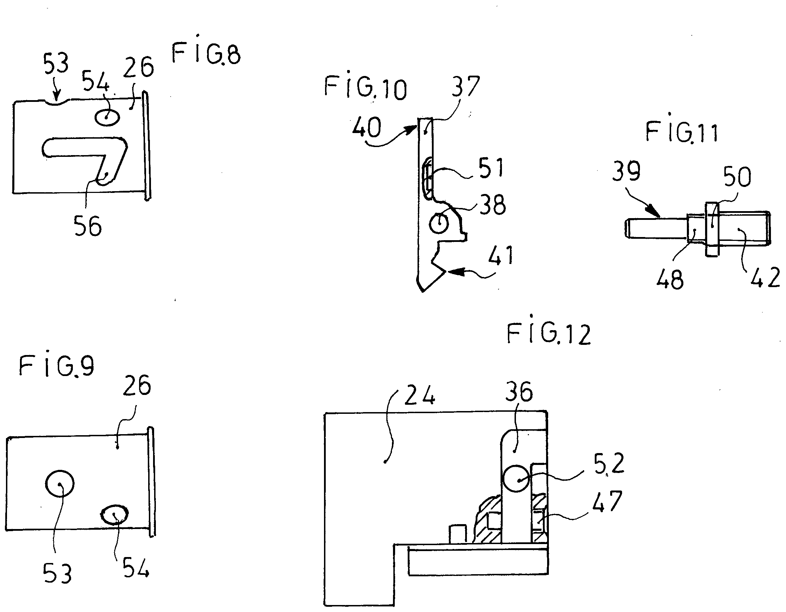

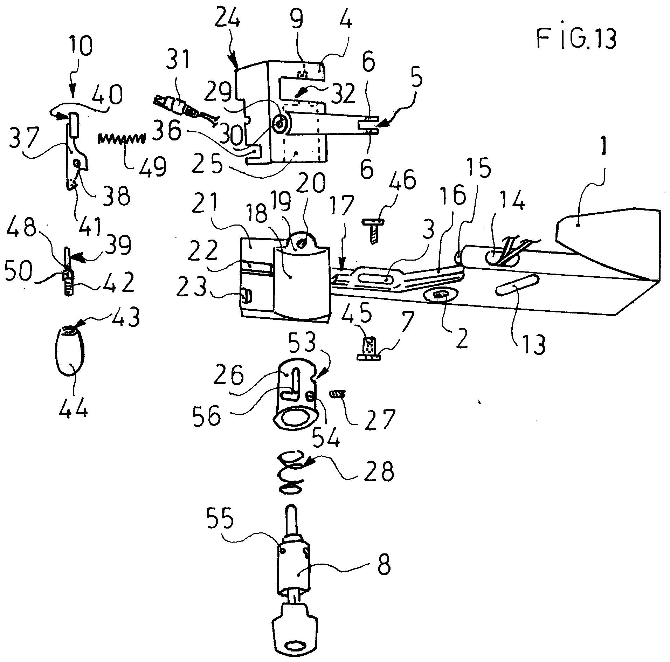

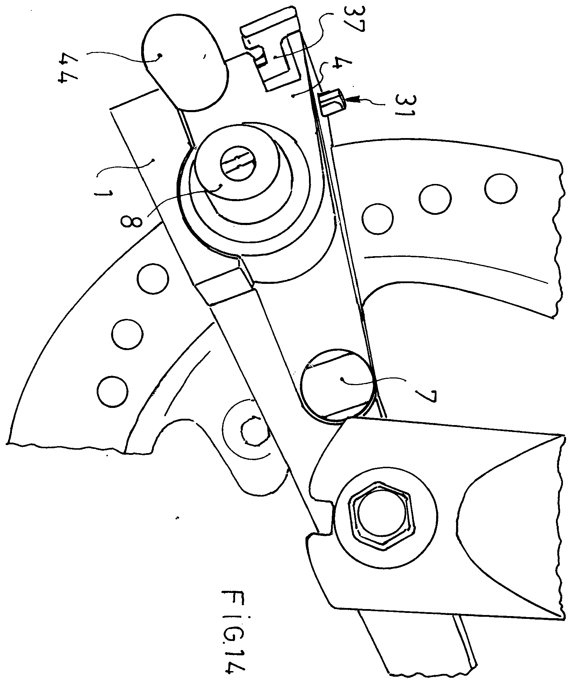

The invention refers to an anti-theft device, integral with the caliper of a disk brake, providing a pin to be inserted in the holes of the disk brake or onto the borders, in the case where the brake is of the type called wave disk. In the known art anti-theft devices are known which substantially consist of locks to be inserted between the holes of the disk brake to prevent the wheel rotation. These devices, however, are not fixed, but they must be applied to the wheel, taking them from a compartment. Arrangement of such locks determines an uncomfortable action, where very often the user gets his hands dirty. The insertion of a lock into the holes of the disk brake is, moreover, particularly difficult in the evening or in the night. Document US2008/053766 A1 discloses an integrated anti-theft device according to the preamble of claim 1. The invention, which is defined by the features of claim 1, creates a new and original anti-theft device suitable to avoid the mentioned disadvantages, such us it is fixed to a brake part, such as the caliper of the brake or, in other embodiment, with fastening to the fork or to the fork sliders. The fastening to a part of the brake or to the fork permits to the invented anti-theft device the integration to the wheel and is such as to avoid to the user to get his hands dirty or to have difficulties in the insertion of the anti-theft device in critical conditions such as at night or in the rain. In case that the disk has been very stressed and has a high temperature, the invented device avoids to come in contact with the brake dusts or with the same overheated brake. The integrated anti-theft device for perforated disk brake consists of a support body fastened to the caliper of the disk brake with connection means, such as screws in threaded holes, with the support body having a hole for connection to a motorcycle fork, a slot on which is connected an arm with fork having holes for the insertion of a pin housed in the holes of the body with fork and in the slot to permit the arm rotation, with said arm equipped with cylinder lock horizontally translating to insert the lock cylinder in any of the holes of the disk brake and in the blind hole of the arm, with the arm with equipped a frontal hook/release system. In other embodiment the support body can be obtained in single body by the extension of one of the two tines of the caliper of the disk brake. In further embodiment the support body can be fastened to the fork or, in an equivalent, in single body to the fork sliders. These and other characteristics and advantages of the invented device become more evident from the following embodiments, described in detail with reference to the enclosed drawings of sheets 1, 2 3, 4 and 5 where the invented device is illustrated in a merely indicative and not limiting way. In detail in sheet 1 figure 1 is lateral view of the support body. In the same sheet 1, figure 2 is upper view and figure 3 is front view of the same support body. In sheet 2 figure 4 is outside lateral view of the arm in middle section, figure 5 is upper view of the same, figure 6 is other upside-down internal view and the figure 7 is frontal view with back middle section. In sheet 3 figures 8 and 9 are lateral views of the bushing of the lock. Figure 10 is lateral view of the lever of the frontal release system. Figure 11 is view of the pin of the lever of the release system whereas the figure 12 is frontal view of the head of the arm with fork. In sheet 4 figure 13 is perspective view of the parts of the invented device not assembled. In sheet 5 figure 14 is perspective side view of the device fastened to the disk brake of a motorcycle. In a preferred but not exclusive embodiment the integrated anti-theft device for perforated disk brake consists of a support body 1 fastened to the caliper of the disk brake with connection means, such as screws in threaded holes, with the support body 1 having a hole 2 for the connection to a motorcycle fork, a slot 3 into which is connected an arm 4 with fork 5 having holes 6 to insert a pin 7 housed into the holes of the fork 5 and the slot 3 to permit the rotation of the arm 4, with said arm 4 having a horizontal cylinder lock translating 8 for inserting the cylinder translating in any of the holes of the disk brake and in the blind hole 9 of the arm 4, with the arm 4 equipped with a frontal hook/release system 10. The support body 1 has in its back part threaded blind holes 11 with further blind holes 12 for fastening to the caliper of the brake. Laterally a further slot 13 is present for the possible alternative fixing to the fork or to the fork sliders of the motorcycle. In the upper part a longitudinal hole 14 is provided to insert a light source 15, i.e. a LED lamp connected with electric cables to the electrical system of the motorcycle as known in the art. The slot 3 is housed onto central rib 16 made onto hollow part 17. Over the rib a semi-cylindrical circular recess 18 is present with, to the inner part of the support part, vertical wall 19 with a blind hole 20 in its central part. At the end of the support body 1 a plane surface 21 is present with rib 22 having the function of reference point for the alignment with the arm 4. Moreover, at the outside end, a hollow 23 is present with hooking crosspiece to house the overhanging part of the lever of the hook/release system 10. The arm 4 comprises a head 24 with hole 25 for the placing of the bushing 26. Inside the bushing 26 is housed the barrel of the cylinder lock translating 8 and the spring 28. The head 24 further comprises upper hole 29 with other threaded hole 30 coaxial to the first to house the switch 31. Said switch is connected to the electrical system of the motorcycle as in the art, and it has the work to control of the insertion of the arm 4 onto the support body 1. The head 24 is further equipped with a fork 32 of such dimensions as to allow the passage of the disk brake with suitable lateral spaces. In the lower part 33 of the head 24 a plane surface 34 is present having a longitudinal hollow 35 suitable to the joint for the alignment with the rib 22 of the support body 1. A further longitudinal hollow 36 is provided for housing the lever of the hook/release system 10. Said system comprises a lever 37 with hole 38 to insert the pin 39. The lever 37 has upper knurled plane surface 40 and lower shaped surface 41 for inserting into the hollow 23 with the hooking crosspiece. The pin 39 further has outside threading 42 to be screwed into the blind hole 43 of the knob 44. In mounting of the invented device, the support body 1 is fastened to the caliper of the brake with connection means, such as screws and threaded holes, and the insertion of the pin of the motorcycle wheel in the hole 2. The cylindrical pin 7 has head with lateral hollows and threaded blind hole 45 into which is inserted a further screw 46 to connect the arm 4 to the support body 1. Said arm 4 provides the insertion of the switch 31 in the blind holes 29 and 30 with connection of the cables of the electrical system of the motorcycle. Inserting the pin 39 in the lateral holes 47 with first threaded part, with the pin 39 having corresponding thread 48, of the head 24 and in the hole 38 of the lever 37, the hook/release system 10 is set, with the spring 49 placed between the lever 37 and the head 24. The knob 44 is screwed onto the pin 39 acting onto the middle part shaped nut 50 of the pin 39. Said spring 49 goes in contact with the circular hollow 51 of the lever 37 to be compressed inside the blind hole 52 of the head 24 when the hook/release system 10 is inserted, i.e. when the shaped surface 41 hook the crossbar of the cavity 23. At the head 24 into the hole 25 is then fixed the bushing 26. In the hole 14 is then housed the light source 15, with the cables connected to the electrical system of the motorcycle with connections to the scope of average technician in the sector. In working, for the hooking, it is provided the insertion of the key into the cylinder lock translating 8 so to determine the output of the bolt of the lock in one of the holes of the disk brake or onto the crown if the motorcycle provides wave brakes, with the bolt of the cylinder lock translating 8 ending its run into the blind hole 9. For the release it is rotated the key in the other way, determining the re-entry of the bolt of the lock 8, with the arm 4 that is raised pushing onto the knurled surface 40 of the lever 37 for the release and raised by the knob 44. The cylinder lock translating 8 involves the insertion of the block cylinder of the lock in one of the holes 53 or 54 of the bushing 26. The grub screw 27, screwed in the threaded hole 55 of the cylinder lock translating 8, can move inside the guide 56 to determine at the ends of said guide the safety closing or opening positions. The closing position of the lock is given to the movement to the brake disk of the bolt of the cylinder lock translating 8, with the bolt of said lock which is inserted in one of the holes of the disk brake and into the blind hole 9 and with the block of the cylinder lock which is inserted into the hole 53 of the bushing 26, compressing the spring 28. In opening, rotating the key in the opposite way, the cylinder lock translating 8 moves in opposite direction, by the expansion of the spring 28, with the block of the cylinder lock that automatically is positioned, pushed to the rotation of the key for the safety, into the hole 54 of bush 26 and with the grub screw 27 that goes to the other end of the guide 56. The bolt of the cylinder lock translating 8 moves to the inside of the bushing 26 until to get caught in the blind hole 20, permitting, in safety, the free rotation of the wheel of the motorcycle. In other embodiment the support body 1 can be obtained in single body to the extension of one of the two tines of the caliper of the disk brake and where preferably is extended the outside part of the brake. In further embodiment the support body 1 can be fixed to the fork or to the fork sliders by the slot 13 with connection means, such as bolts, welds or in a single body. The light source 15 helps the insertion of the key and the centering of the lock 8 in the holes of the disk in low-light conditions and the switch 31 permits to control that the arm 4 was closed onto the support body 1, with the hooking actuated by the knob 44 and the lever 37.

## Claims

1. Integrated anti-theft device for perforated disk of a motorcycle disk brake, the device comprising a support body (1) fastened to the caliper of the disk brake with connection means and a translating cylinder lock (8), with the support body (1) having a hole (2) for the connection to the motorcycle fork; **characterized in that** the device provides a slot (3) on which is connected an arm (4) with fork (5) having holes (6) to insert a pin (7), placed into the holes (6) of the fork (5) and into the slot (3), to permit the rotation of the arm (4), wherein the arm (4), into which is located the horizontal translating cylinder lock (8), permits the insertion of the translating cylinder lock in any of the holes of the disk brake and in the blind hole (9) of the arm (4), with the arm (4) equipped with a frontal hook/release system (10).

2. Integrated anti-theft device according to the previous claim, **characterized in that** the support body (1) can be fixed to the motorcycle fork or to the motorcycle fork sliders by a slot (13) with connection means, such as bolts, welds, or alternatively in a single body.

## Patentansprüche

1. Integrierte Diebstahlsicherungs-Vorrichtung für gelochte Scheibenbremsen für Motorrad, in dem die Vorrichtung einen am Scheibenbremssattel mit Verbindungsmitteln befestigten Stützkörper (1) und ein verschiebendes Zylinderschloss (8) enthält, wo der Stützkörper (1) ein Durchgangsloch (2) fur die Verbindung zum Motorradgabel hat; dadurch gekenntzeichnet, dass die Vorrichtung mit einem Knopfloch (3) an dem ein Arm (4) mit Gabel (5) mit Löchern (6) zum Einsetzen eines Stiftes (7) ausgeschlossen ist, der in den Gabellöchern (5) (6) und im Kopfloch (3) platziert ist, um die Drehung des Armes (4) zu erlauben, wo der Arm (4), in dem das verschiebenden Zylinderschloss (8) platziert ist, die Einsetzung des verschiebenden Zylinderschloss in irgendeinen der Scheibenbremslöchern und im Blindloch (9) des Armes (4) erlaubt, mit dem mit frontalen Haken/Kupplung System (10) ausgestatteten Arm (4).

2. Integrierte Diebstahlsicherungs-Vorrichtung, wie am vorherigen Patentanspruch, **dadurch gekennzeichnet, dass** der Stützkörper (1) an der Motorradgabel oder der Motorradgabelscheide durch einem Kopfloch (13) mit Verbindungsmitteln, wie Bolzen, Schweissen oder alternativ in einem einzigen Körper befestigten werden kann.

## Revendications

1. Dispositif anti-vol intégré, pour disque pré-percé d'un frein a disque pour motocylette, dont le dispositif inclut un corps de support (1) branché à l'étrier du frein à disque par moyens d'une connexion et d'une serrure à cylindre mobile (8), le corps du support (1) ayant un trou passant (2) pour la connexion à la fourche avant de la motocyclette; caractérisé du fait que le dispositif est doué d'un oeillet (3) sur lequel est branché un bras (4) doué d'une fourche (5) ayant des trous (6) pour l'emplacement d'un axe (7) arrangé dans les trous (6) de la fourche (5) et dans l'oeillet (3) pour rendre possible la rotation du bras (4), où le bras (4) dans lequel est fixée la serrrure à cylindre mobile (8) rend possible l'introduction de la serrure à cylindre mobile dans n'importe quel trou du frein à disque et dans le trou borgne (9) du bras (4) en tant que le bras (4) est doué d'un systeme frontal d'attelage et dételage (10).

2. Dispositif anti-vole intégré, voir indication précédente, caractérisé du fait que le corps de support (1) peut être fixé à la fourche de la motocyclette par moyen d'un oeillet (13), par de systemès de connexion, tels que boulons, soudages ou bien un corps unique.
